# EUROPÄISCHE PATENTSCHRIFT

(11) **EP 0 990 572 B1**
(45) Veröffentlichungstag und Bekanntmachung des Hinweises auf die Patenterteilung: **31.08.2005**
(21) Anmeldenummer: 99109031.7
(22) Anmeldetag: 07.05.1999
(51) Int. Cl.: B61D 17/04, B61D 17/08, B62D 31/02

(54) **Wagenkasten mit Kastengerippe**
Vehicle body with body framework
Caisse de véhicule avec ossature de caisse

(30) Priorität: 30.09.1998 DE 19844811
(43) Veröffentlichungstag der Anmeldung: 05.04.2000
(73) Patentinhaber: Bombardier Transportation GmbH, 13627 Berlin (DE)
(72) Erfinder: Veit-Salomon, Emil, 90480 Nürnberg (DE); Koch, Tobias, 90491 Nürnberg (DE)
(74) Vertreter: Cohausz & Florack

(56) Entgegenhaltungen:
- CH-A- 283 298
- DE-A- 2 642 531
- DE-A- 19 537 498
- FR-A- 2 357 408
- US-A- 4 283 086

## Beschreibung

Die Erfindung betrifft einen Wagenkasten gemäß dem Oberbegriff des ersten Anspruchs.

Ein bekannter Wagenkasten dieser Art (DE 1900649 U1) besteht aus einem insichgefügten Kastengerippe, das durchgehende obere und untere waagerechte Langträger aufweist, de jeweils im Bereich der Seitenwände, des Daches und der Bodenstruktur durch senkrechtzu den vier Langträgern verlaufende Spante fest miteinander verbunden sind. Die einzelnen, zwischen den Spanten und den Langträgern gebildeten freien Kastengerippefelder sind dabei mittels Teilseitenwandelementen verschlossen. Die aneinander angrenzenden Teilseitenwandelemente schließen entlang ihrer Außenkanten dicht aneinander an. Teilseitenwandelemente können an ihrer Innenseite mit der üblichen Ausstattung für Abteile, nämlich mit Fest- oder Klappsitzen ausgestattet sein.

Aus der DE 195 37 498 A1 ist ein gattungsgemäßer Wagenkasten bekannt, bei dem unter anderem die Teilseitenwandelemente durch ihre Verbindung untereinander und mit dem Wagenkastengerippe hauptsächlich die im Wagenkasten auftretenden Schubbelastungen übernehmen. Ein ähnlicher gattungsgemäßer Wagenkasten ist aus der US 4,283,086 bekannt. Auch hier sollen die Teilseitenwandelemente als Versteifung wirken, die zur Steifigkeit des gesamten Wagenkastens beiträgt.

Beide gattungsgemäßen Wagenkästen weisen den Nachteil auf, dass die Teilseitenwandelemente aufgrund ihrer lasttragenden Funktion vergleichsweise aufwändig gestaltet werden müssen. Insbesondere wird gegebenenfalls vergleichsweise viel Platz für Elemente benötigt, welche die ausreichende Steifigkeit der Teilseitenwandelemente sicherstellen. Hierdurch ergeben sich insgesamt über ihre gesamte Ausdehnung vergleichsweise dicke und schwere Teilseitenwandelemente. Solche Teilseitenwandelemente erschweren zum einen durch ihre vergleichsweise großen Abmessungen und vor allen Dingen durch ihr Gewicht die Handhabung bei der Montage. Zum anderen ergibt sich hierdurch bei gegebenen Außenabmessungen des Wagenkastens eine Verkleinerung des verfügbaren Fahrgastraums im Inneren des Wagenkastens.

Der Erfindung liegt die Aufgabe zugrunde, bei einem Wagenkasten gemäß dem Oberbegriff des ersten Anspruchs Maßnahmen zu treffen, durch welche bei einfacher Montagemöglichkeit eine gute Ausnutzung des Raums zwischen den seitlichen Spanten des Wagenkastengerippes erreicht wird.

Die Lösung dieser Aufgabe erfolgt gemäß der Erfindung durch die kennzeichnenden Merkmale des ersten Anspruchs.

Bei einem Aufbau eines Wagenkasten gemäß der Erfindung können fertig vormontierte, gegebenenfalls mit Ausstattungselementen wie Sitzen oder dergleichen und endgültiger Innenwandverkleidung versehene Teilseitenwandelemente in das jeweilige freie Wagenkastengerippefeld von außen eingesetzt werden. Dabei greift das jeweilige Teilseitenwandelement zumindest teilweise insbesondere in dem Bereich in den Raum zwischen den Spanten ein, in dem zwischen der Au ßenwandfläche und der Innenwandverkleidung eine wärme- und/oder geräuschdämmende Isolierschicht eingebracht ist. Die Befestigung der jeweiligen Teilseitenwandelementen an den senkrechten Spanten erfolgt mittels einer Klebermasse, die zumindest im Bereich der senkrechten Seitenkanten über die gesamte Überdeckungslänge zwischen Spant und Seitenkante im montierten Zustand in Überdeckung kommt. Das Teilseitenwandelement ist dabei insbesondere an seinen senkrechten Seitenkanten stufig in Tiefenrichtung abgesetzt, so daß seine freien äußeren Kantenbereiche einen Abschnitt geringerer Wandstärke aufweisen, als die in Wagenkastenlängenrichtung dazwischenliegenden Abschnitte. Durch diese Abstufung wird erreicht, daß der äußere Abschnitt mit der geringeren Wandstärke vor die Außenfläche des zugehörigen Spants greift. Aneinander angrenzende Teilseitenwandelemente liegen somit mit ihren Außenflächen ebenengleich aneinander. Die Verklebung der Teilseitenwandelemente mit den zugeordneten Spanten erfolgt vorzugsweise dadurch, daß auf die Außenseite des zugehörigen Spants eine durchgehende Kleberspur aufgetragen wird, auf die die Innenseite des betreffenden Abschnitts geringerer Wandstärke des zugehörigen Teilseitenwandelements aufgestetzt wird. Der jeweilige Abschnitt geringerer Wandstärke reicht dabei bis annähernd zur Mitte des zugehörigen Spants, so daß zwischen aneinander angrenzenden Teilseitenwandelementen ein Spalt verbleibt der mit Dichtmasse gefüllt wird. Dadurch wird ein dichter Abschluß der Teilseitenwandelemente erreicht. In Tiefenrichtung, also zur Wagenkastenmitte hin, wird es durch die Stufung des jeweiligen Teilseitenwandelementes möglich, nicht nur den Raum zwischen den Spanten zu nutzen, sondern die Wandstärke so groß zu wählen, daß die Innenverkleidung des Teilseitenwandelements die Innenseite des zugehörigen Spants überragt. Die senkrechten Spanten sind dadurch zwischen benachbarten Teilseitenwandelementen geschützt angeordnet, wobei die benachbarten Teilseitenwandelemente mittels einer ihre Innenflächen verbindende und die Innenseite des zugehörigen Spants übergreifende Verkleidung miteinander verbunden werden können. Die Spanten sind dadurch rundum verkleidet und bilden weder innen-noch außenseitig eine Unfallgefahr. Der Anschluß des jeweiligen Teilseitenwandelements mit der Bodenstruktur oder dem zugehörigen unteren Langträger kann in der Weise erfolgen, daß an die untere waagerrecht verlaufende innenliegende Längskante des betreffenden Teilseitenwandelementes ein Federansatz angeformt wird, der in eine angepaßte Nut einer in Bereich des zugehörigen Langträgers vorgesehenen Nutleiste eingreift, die im Raum zwischen den Spanten festgesetzt ist.

Die Erfindung ist nachfolgend anhand von Prinzipskizzen eines Ausführungsbeispieles näher erläutert.

Es zeigen:

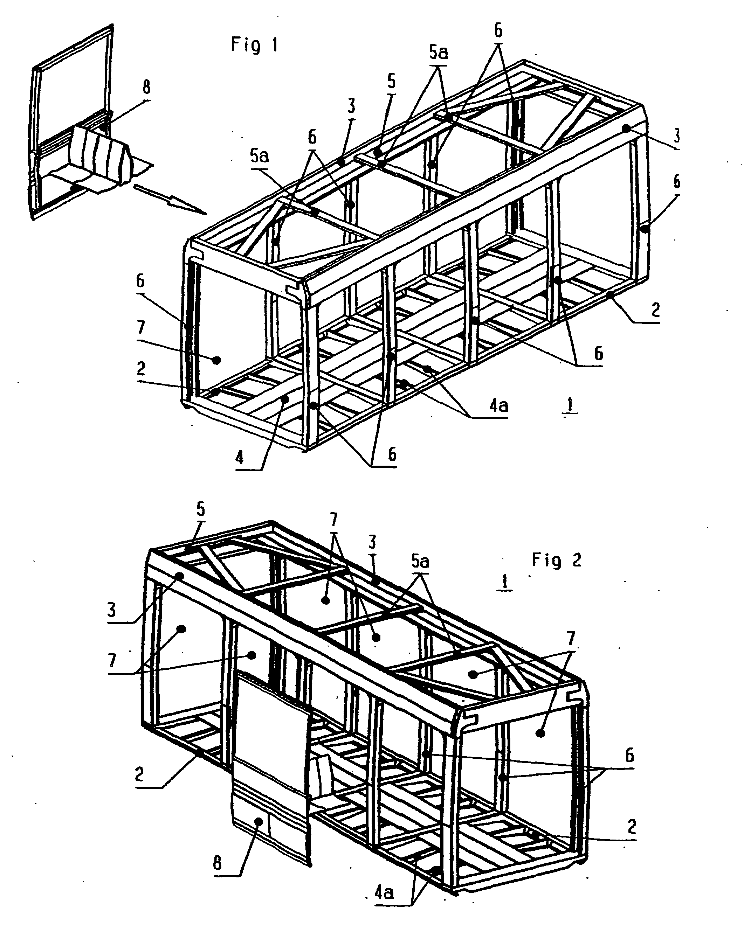

- Figur 1: eine perspektivische Ansicht eines Wagenkastengerippes mit einem Teilseitenwandelement in Explosionsdarstellung mit einer innenseitigen Ansicht des Teilseitenwandelements,
- Figur 2: die Anordnung nach Figur 1 mit einer Außenansicht auf das Teilseitenwandelement,
- Figur 3: einen halbseitigen Schnitt durch den Wagenkasten mit eingesetztem Teilseitenwandelement,
- Figur 4: eine vergrößerte Darstellung der Anordnung nach Figur 3 im Bereich X in vergrößerter Darstellung und
- Figur 5: einen Querschnitt im Bereich eines Spants.

Ein Kastengerippe 1 für einen Wagenkasten, insbesondere für ein Schienenfahrzeug ist aus zwei parallel zueinander verlaufenden unteren Langträgern 2 und zwei ebenfalls in Längsrichtung des Wagenkastens parallel zueinander sowie zu den unteren Langträgern 2 verlaufenden oberen Langträgern 3 aufgebaut. Die unteren Langträger 2 sind dabei mittels einer Bodenstruktur 4 miteinander verbunden, die quer zu den Trägem 2 verlaufende Spanten 4a umfaßt. Im Bereich der Aufnahme 5 für ein Dach sind die oberen Langträger 3 durch ebenfalls quer zur Längsrichtung verlaufende Spanten 5a verbunden. Für die Ausbildung der zumindest annähernd senkrecht stehenden Seitenwandstruktur sind die unteren und oberen Langträger 2, 3 jeweils durch vertikal verlaufende Spanten 6 fest verbunden. Die Spanten 6 verlaufen parallel zueinander, wobei zwischen benachbarten Spanten 6 und den zugehörigen Abschnitten der Langträger 2, 3 jeweils ein freies Kastengerippefeld 7 gebildet ist. Diese Kastengerippefelder 7 werden mittels angepaßten Teilseitenwandelementen 8 verschlossen.

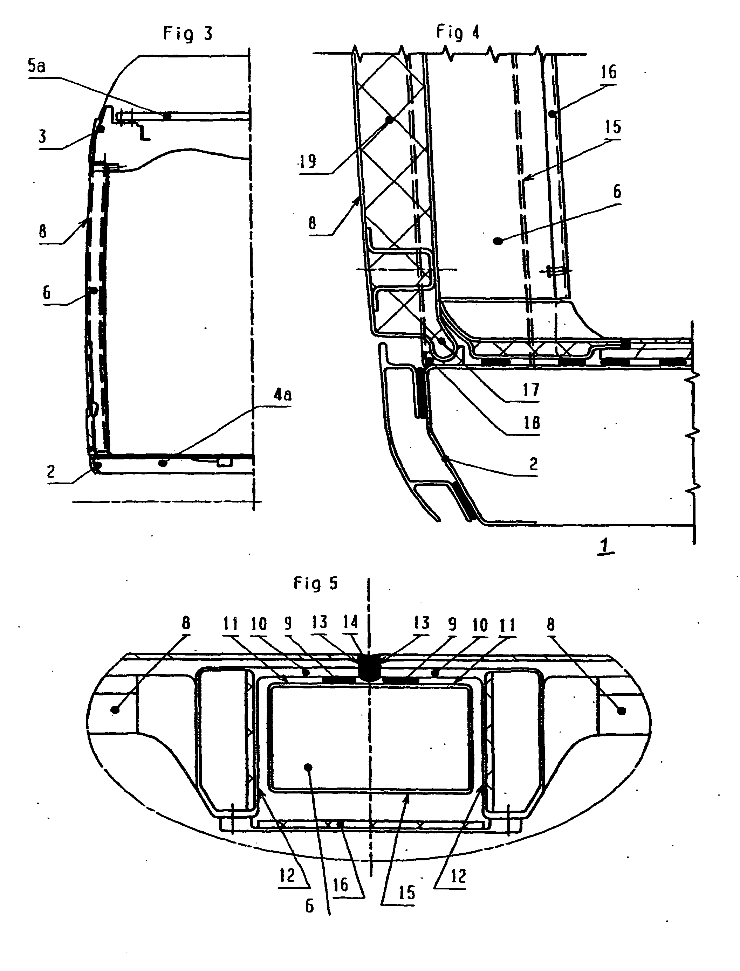

Das jeweilige Teilseitenwandelement 8 greift in Tiefenrichtung, also zur Wagenkastenmitte hin, in fertig montiertem Zustand gemäß Figur 3 zumindest teilweise in den Raum ein, der zwischen benachbarten Spanten 6 eingeschlossen ist. Dieses Teilseitenwandelement 8 ist für sich mittels einer elastischen Klebemasse 9 (Figur 5) an den zugehörigen Spanten 6 festgesetzt. Dadurch werden die Spanten 6 in die Seitenwandstruktur einbezogen. Dabei ist es zweckmäßig, das jeweilige Teilseitenwandelement 8 entlang seiner senkrechten Seitenkanten stufig in Tiefenrichtung abzusetzen, so daß ein äußerer Abschnitt 10 mit verringerter Wandstärke gebildet, der vor die Außenseite 11 des Spantes 6 greift, während die davon ausgehende, in Tiefenrichtung ansteigende Stufenflanke 12 seitlich neben dem Spant 6 steht. Die Endkanten 13 der Abschnitte 10 reichen bis knapp zur Mitte des zugehörigen Spants 6, wobei zwischen einander gegenüberstehenden Endkanten 13 eine Dichtmasse 14 eingebracht ist. Dabei stehen sich Abschnitte 10 bzw. die Außenflächen der zugehörigen Teilseitenwandelemente 8 flächenbündig nebeneinander.

Die Abschnitte 10 mit der gegenüber dem dazwischen liegenden Abschnitt verminderter Wandstärke ist über ihre gesamte Länge mittels einer ununterbrochenen, durchgehenden Spur der Klebermasse 9 an der Außenseite 11 des betreffenden Spants 6 festgesetzt, so daß außer einer zuverlässigen elastischen Verbindung auch ein luft- und wasserdichter Abschluß gegeben ist. Die Stufenflanken 12 der einzelnen Teilseitenwandelemente 8 sind in Tiefenrichtung so groß ausgebildet, daß sie über die Innenseiten 15 der Spanten 6 zur Wagenkastenmitte hin ragen. Dadurch sind die Spanten 6 in die Seitenwandstruktur integriert und werden noch mittels einer die Innenseite 15 übergreifende Verkleidung 16 miteinander verbunden. Die Verkleidung 16 bewirkt zudem, daß der Spant 6 vollkommen abgedeckt ist.

Der Eingriff der Teilseitenwandelemente 8 in den Raum zwischen den Spanten 6 ermöglicht zudem eine funktionsgerechte Verbindung der unteren waagerechten Längskante der Teilseitenwandelemente 8 mit dem Kastengerippe 1 im Bereich des jeweiligen unteren Langträgers 2. Hierzu ist das Teilseitenwandelement 8 an seiner unteren waggerecht verlaufenden Innenlängskante mit einem über die gesamte Länge verlaufenden Federansatz 17 versehen, der in eine nach oben offene angepaßte Nutleiste 18 formschlüssig eingreift. Die Nutleiste 18 ist dabei im Bereich des Langträgers 2 bzw. der Bodenstruktur 4a festgesetzt. Hierdurch wird insbesondere die Montage erleichtert, in dem das betreffende Teilseitenwandelemente 8 an der Oberseite vom Wagenkastengerippe 1 abgeneigt mit dem Federansatz 17 in die angepaßte Nut der Nutleiste 18 eingestellt und anschließend an die beiden zugehörigen Spanten 6 angeklappt wird. Die vorher eingefügte Klebermasse 9 bewerkstelligt dann die elastische mechanische Befestigung der Teilseitenwandelemente 8 und mit dem jeweiligen Spant 6.

Bei glatt durchlaufender Außenfläche der Teilseitenwandelemente 8 nimmt ihre Wandstärke von der Stufenflanke 12 bzw. der Verkleidung 16 aus zum mittleren Bereich hin ab. Dabei sind zwischen Außenfläche und Innenfläche des Teilseitenwandelements 8 vorhandene Hohlräume zumindest weitgehend mit wärme- und/oder schalldämmender Isoliermasse 19 gefüllt, insbesondere ausgeschäumt. Zudem können die Seitenwandelemente auch als Türelemente ausgebildet sein.

## Patentansprüche

1. Wagenkasten, insbesondere für Schienenfahrzeuge, mit einem Wagenkastengerippe aus durchgehenden oberen und unteren Langträgern (3, 2) die mittels senkrecht dazu verlaufenden Spanten (6) fest miteinander verbunden sind, sowie mit Teilseitenwandelementen (8), die jeweils ein zwischen den Langträgern (3, 2) und zwei Spanten (6) eingeschlossenes Kastengerippefeld verschließen, wobei das jeweilige Teilseitenwandelement (8) in Tiefenrichtung zumindest teilweise in den Raum zwischen den zugehörigen Spanten (6) greift, **dadurch gekennzeichnet, dass** die oberen und unteren Langträger (3, 2) nur mittels der Spanten (6) fest miteinander verbunden sind und das jeweilige Teilseitenwandelement (8) mittels einer elastischen Klebeverbindung (9) an den Spanten (6) festgesetzt ist.

2. Wagenkasten nach Anspruch 1, **dadurch gekennzeichnet, dass** das Teilseitenwandelement (8) entlang seiner senkrechten Seitenkanten als Stufe (12) in Tiefenrichtung abgesetzt ist, derart, dass seine freien Kantenbereiche einen Abschnitt (10) geringerer Wandstärke als der dazwischenliegende Abschnitt aufweisen und dass der Abschnitt (10) geringerer Wandstärke mit der Außenfläche des zugehörigen Teilseitenwandelement (8) außenseitig flächenbündig ist und die Außenseite (11) des zugehörigen Spants (6) bis annähernd zur Mitte überdeckt.

3. Wagenkasten nach Anspruch 2, **dadurch gekennzeichnet, dass** die Abschnitte (10) geringerer Wandstärke mittels einer durchgehenden Klebermassespur (9) mit dem zugehörigen Spant (6) verbunden sind.

4. Wagenkasten nach wenigstens einem der Ansprüche 1 bis 3, **dadurch gekennzeichnet, dass** zwischen den senkrechten Endkanten (13) benachbarter Teilseitenwandelemente (8) ein Spalt vorgesehen ist, der mit Dichtmasse (14) gefüllt ist.

5. Wagenkasten nach wenigstens einem der Ansprüche 1 bis 4, **dadurch gekennzeichnet, dass** das Teilseitenwandelement (8) im Bereich der Spanten (6) deren Innenseite (15) seitlich überragt und dass benachbarte Teilseitenwandelemente (8) mittels einer die Innenseite (15) des zugehörigen Spants (6) übergreifenden Verkleidung (16) miteinander verbunden sind.

6. Wagenkasten nach wenigstens einem der Ansprüche 1 bis 5, **dadurch gekennzeichnet, dass** die Teilseitenwandelemente (8) an ihrer unteren waagerecht verlaufenden innenliegenden Längskante einen Federansatz (17) aufweisen, der jeweils in eine angepasste Nut einer im Bereich des zugehörigen Langträgers (2) im Raum zwischen den Spanten (6) angeordneten Nutleiste (18) eingreift.

## Claims

1. Car body, in particular for rail vehicles, with a car body framework of continuous upper and lower longitudinal beams (3, 2) that are firmly connected with each other by means of ribs (6) running perpendicular to the latter and with partial side wall elements (8), each covering a body framework field enclosed between said longitudinal beams (3, 2) and two of said ribs (6), wherein said respective partial side wall element (8), in a depth direction, projects at least partly into the space formed between said corresponding ribs (6), **characterized in that**, said upper and lower longitudinal beams (3, 2) are firmly connected by said ribs (6) only and said respective partial side wall element (8) is mounted to said ribs (6) via an elastic adhesive connection (9).

2. Car body according to claim 1, **characterized in that**, said partial side wall element (8), along its vertical side edges, is arranged in the form of a step (12) in said depth direction such that its free edge areas have a segment (10) that has a lower wall thickness than the segment between them, and **in that** said segment (10) that has the lower wall thickness, at its outer side, is flush with an outside surface of said corresponding partial side wall element (8) and covers the outer side (11) of said corresponding rib (6) up to approximately the center of said rib (6).

3. Car body according to claim 2, **characterized in that**, said segments (10) of lower wall thickness are connected to said corresponding rib (6) by a continuous line of adhesive compound (9).

4. Car body according to at least one of claims 1 to 3, **characterized in that**, there is a gap filled with sealing compound (14) and formed between vertical terminal edges (13) of neighboring partial side wall elements (8).

5. Car body according to at least one of claims 1 to 4, **characterized in that**, said partial side wall element (8), in the region of said ribs (6), laterally extends beyond the inner side (15) of the latter, and **in that** neighboring partial side wall elements (8) are connected to each other by a lining that straddles said inner side (15) of said corresponding rib (6).

6. Car body according to at least one of claims 1 to 5, **characterized in that**, said partial side wall elements (8) have a tongue (17) on a bottom horizontal inboard longitudinal edge that is engaged with a matching groove of a groove strip (18) located adjacent to said corresponding longitudinal beam (2) in the space between said ribs (6).

## Revendications

1. Caisson de wagon, notamment pour véhicules ferroviaires, comportant une carcasse de caisson de wagon composée de longerons continus supérieurs et inférieurs (3, 2) qui sont reliés fixement entre eux au moyen de montants (6) s'étendant perpendiculairement aux derniers, ainsi que d'éléments partiels de paroi latérale (8) qui ferment respectivement un champ de carcasse de caisson inclus entre les longerons (3, 2) et deux montants (6), l'élément partiel de paroi latérale respectif (8) empiétant, dans le sens de la profondeur, du moins partiellement, dans l'espace entre les montants (6) correspondants, **caractérisé en ce que** les longerons supérieurs et inférieurs (3, 2) ne sont reliés fixement entre eux qu'au moyen des montants (6) et que l'élément partiel de paroi latérale respectif (8) est fixé au moyen d'une connexion adhésive élastique (9) aux montants (6).

2. Caisson de wagon selon la revendication 1, **caractérisé en ce que** l'élément partiel de paroi latérale (8) s'abaisse, le long de ses bords latéraux verticaux en formant un étage (12) dans le sens de la profondeur de manière à ce que les zones libres des ses bords présentent une section (10) de plus faible épaisseur de paroi que la section intermédiaire et que la section (10) de plus faible épaisseur de paroi soit, du côté extérieur, à fleur avec la surface extérieure de l'élément partiel de paroi latérale correspondant (8) et recouvre le côté extérieur (11) du montant correspondant (6) approximativement jusqu'au milieu.

3. Caisson de wagon selon la revendication 2, **caractérisé en ce que** les sections (10) à plus faible épaisseur de paroi sont reliées au moyen d'une ligne de colle continue (9) au montant (6) correspondant.

4. Caisson de wagon selon au moins une des revendications 1 à 3, **caractérisé en ce que**, entre les bords terminaux verticaux (13) des éléments partiels de paroi latérale voisins (8), il est prévu une fente qui est remplie d'une masse d'étanchéité (14).

5. Caisson de wagon selon au moins une des revendications 1 à 4, **caractérisé en ce que** l'élément partiel de paroi latérale (8) déborde latéralement au niveau des montants (6) du côté intérieur (15) des derniers et que les éléments partiels de paroi latérale voisins (8) sont reliés entre eux au moyen d'un revêtement (16) empiétant sur le côté intérieur (15) du montant correspondant (6).

6. Caisson de wagon selon au moins une des revendications 1 à 5, **caractérisé en ce que** les éléments partiels de paroi latérale (8) présentent, sur leur bord longitudinal inférieur s'étendant à l'horizontale, une saillie (17) qui s'engage respectivement dans une rainure adaptée d'une baguette rainurée (18) disposée au niveau du longeron (2) correspondant dans l'intervalle entre les montants (6).
